(19)

Europäisches
Patentamt
European
Patent Office
Office européen
des brevets

(11)     **EP 2 505 971 A2**

(12)     **EUROPEAN PATENT APPLICATION**

(43) Date of publication:
  **03.10.2012   Bulletin 2012/40**

(51) Int Cl.:
  **G01F 1/74** (2006.01)     **E21B 43/12** (2006.01)
  **G01N 21/85** (2006.01)

(21) Application number: **12162085.0**

(22) Date of filing: **29.03.2012**

(84) Designated Contracting States:
  **AL AT BE BG CH CY CZ DE DK EE ES FI FR GB
  GR HR HU IE IS IT LI LT LU LV MC MK MT NL NO
  PL PT RO RS SE SI SK SM TR**
  Designated Extension States:
  **BA ME**

(30) Priority:   **01.04.2011   US 201113078772**

(71) Applicant: **Weatherford/Lamb Inc.**
  **Houston, Texas 77056 (US)**

(72) Inventors:
  • **Hurst, Gregg**
    **Humble, TX Texas 77346 (US)**

  • **Lievois, John**
    **Houston, TX Texas 77024 (US)**
  • **Booth, Ken George**
    **Lopez Island, WA Washington 98261 (US)**

(74) Representative: **Shanks, Andrew**
    **Marks & Clerk LLP**
    **Aurora**
    **120 Bothwell Street**
    **Glasgow**
    **G2 7JS (GB)**

(54)     **Pump controller with multiphase measurement**

(57)     Methods and apparatus for measuring phase flow rate of the components of a multiphase fluid in a conduit. A pumping system pumps out a multiphase fluid from a wellbore. At least one processor, which may also control the pump, is used to determine the total liquid flow rate over time. An optical phase fraction meter (e.g., an infrared filter photometer) is used to determine the real-time phase fraction of the components of the multiphase fluid. Algorithms are used to calculate the volumetric flow rates of the individual components of the multiphase fluid based upon the total liquid flow rate and the phase fraction. Embodiments of the present invention provide an inexpensive system capable of measuring real time water-to-oil ratios in mature fields, where the water-to-oil ratio is high and the oil per-well production is low.

FIG. 1

EP 2 505 971 A2

Description

## BACKGROUND OF THE INVENTION

### Field of the Invention

Embodiments of the invention generally relate to measuring flow rates of components in a multiphase fluid and, more specifically, to a pump control unit coupled to an infrared phase fraction meter.

### Description of the Related Art

Oil and gas wells often produce water along with hydrocarbons during normal production from a hydrocarbon reservoir within the earth. The water resident in the reservoir frequently accompanies the oil and/or gas as it flows up to surface production equipment. Operators periodically measure the fractions of an overall production flow stream that are water/oil/gas for purposes such as improving well production, allocating royalties, properly inhibiting corrosion based on the amount of water and generally determining the well's performance.

Production of oil with sucker-rod pumps is the most common form of artificial lifting in the world. Sucker-rod pumps are often accompanied by a local field computer called a rod pump controller, which uses sensor inputs to optimize pump performance. Rod pumps are characteristically employed in mature fields where the water-to-oil ratio of produced fluids is high and the subsequent oil production on a per-well basis is low. It is important for an operator to know the oil and water production from the well for fiscal and operational reasons. However, low production wells cannot justify expensive measurement systems.

Rod pump wells are typically tested for their oil and water production by gauging tanks or periodic routing through a test separator. The test separator is typically at a central location where a test manifold allows the user to isolate a single well at a time for testing. Therefore, a need exists for a low cost multiphase flow meter that can be located at a single well.

Rod pump controllers are able to offer gross fluid measurement but cannot compare that measurement with a real time fluid water cut measurement. Therefore, a further need exists for a system that can provide real time, accurate, and low cost multiphase measurements.

## SUMMARY OF THE INVENTION

Embodiments of the present invention generally relate to measuring flow rates of components in a multiphase fluid using a pump control unit coupled to an infrared phase fraction meter.

One embodiment of the present invention provides an apparatus for determining at least one parameter (e.g., an individual phase volume or a phase flow rate) of a multiphase fluid produced by a pump. The apparatus generally includes an optical phase fraction meter configured to determine a phase fraction of the multiphase fluid and at least one processor. The at least one processor is typically configured to determine a total liquid volume or an instantaneous total liquid flow rate of the multiphase fluid produced by the pump during a time interval and to determine for the time interval at least one individual phase volume or at least one phase flow rate based on the phase fraction determined by the optical phase fraction meter and the total liquid volume or the instantaneous total liquid flow rate.

Another embodiment of the present invention provides a system for producing a multiphase fluid from a wellbore. The system typically includes a wellhead disposed at the surface of the wellbore, a pump for moving the multiphase fluid out of the wellbore to the wellhead, an optical phase fraction meter coupled to the wellhead and configured to determine a phase fraction of the fluid, and at least one processor configured to determine a total liquid volume or an instantaneous total liquid flow rate of the multiphase fluid produced by the pump during a time interval and to determine for the time interval at least one individual phase volume or at least one phase flow rate based on the phase fraction determined by the optical phase fraction meter and the total liquid volume or the instantaneous total liquid flow rate.

Yet another embodiment of the present invention is a method. The method generally includes determining, using a processor associated with a pump, a total liquid volume or an instantaneous total liquid flow rate of a multiphase fluid produced by the pump during a time interval; determining a phase fraction of the multiphase fluid using optical spectroscopy; and calculating for the time interval at least one individual phase volume or at least one phase flow rate based on the phase fraction and the total liquid volume or the instantaneous total liquid flow rate.

## BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

FIG. 1 is a schematic diagram of a sucker-rod pumping system with a control unit for controlling a rod pump to extract fluid from a well through a wellhead and an infrared filter photometer disposed at the wellhead to determine phase fractions of the extracted fluid, according to embodiments of the invention.

FIG. 2 is a partial section view of the infrared filter photometer having a probe end inserted into a conduit coupled to the wellhead, according to embodiments of the invention.

FIG. 3 is an exploded view of internal components of the infrared filter photometer illustrated in FIG. 2, according to embodiments of the invention.

FIG. 3A is an end view of a connector taken across line 3A-3A in FIG. 3, according to embodiments of the invention.

FIG. 4 is a graph illustrating absorption of two mixture types of oil, water, and condensate for an infrared region and wavelengths thereof selected for interrogation via channels of an infrared filter photometer, according to embodiments of the invention.

FIG. 5 is a flow chart of example operations for determining at least one individual phase volume of the fluid, which may be performed by the infrared filter photometer and the control unit of FIG. 1, according to embodiments of the invention.

FIG. 6 illustrates several pump stroke cycles and proper periods during the pump stroke cycles for taking measurements with the infrared filter photometer, according to embodiments of the invention.

FIG. 7 illustrates example position of a polished rod during a single pump cycle, according to embodiments of the invention.

FIG. 8 is a graph of example rod velocity for the rod position of FIG. 7, according to embodiments of the invention.

FIG. 9 is a graph of an example water cut and an example flow rate versus time, according to embodiments of the invention.

## DETAILED DESCRIPTION

Embodiments of the invention generally relate to pumping systems capable of multiphase measurement using a pump control unit (e.g., a rod pump controller) or other suitable processor coupled to an infrared phase fraction meter. Embodiments of the invention provide a number of advantages over conventional pumping systems. For example, conventional pump control systems have been able to offer gross fluid measurements, but these measurements have never previously been coupled with real-time water cut measurements. Additionally, embodiments of the invention provide a system that is much cheaper than typical multiphase meters, which may be occasionally attached to a single well, especially given that a pump controller is already present in a typical pumping system. Further, embodiments of the invention measure the water cut of an individual well at the well-head, without routing the fluid to a centrally located test separator for a field of wells, such that each well may be continuously monitored.

Although embodiments of the invention are described below with respect to a sucker-rod pumping system and a rod pump controller, other embodiments may include any of various suitable pumps and any type of one or more processors associated with a pump, respectively. The pump may comprise a positive displacement pump or another type of pump. Positive displacement pumps include not only sucker-rod pumps, but also progressing cavity pumps (PCPs), which are also known as progressive cavity pumps, eccentric screw pumps, or simply cavity pumps. For some embodiments, the processor(s) may be used to control the pumps. Furthermore, one or more of the processors associated with the pump may be located at the wellsite where the pump is disposed in the wellbore for some embodiments, while for other embodiments, the processar(s) may be remote from the wellsite.

## AN EXAMPLE PUMP SYSTEM

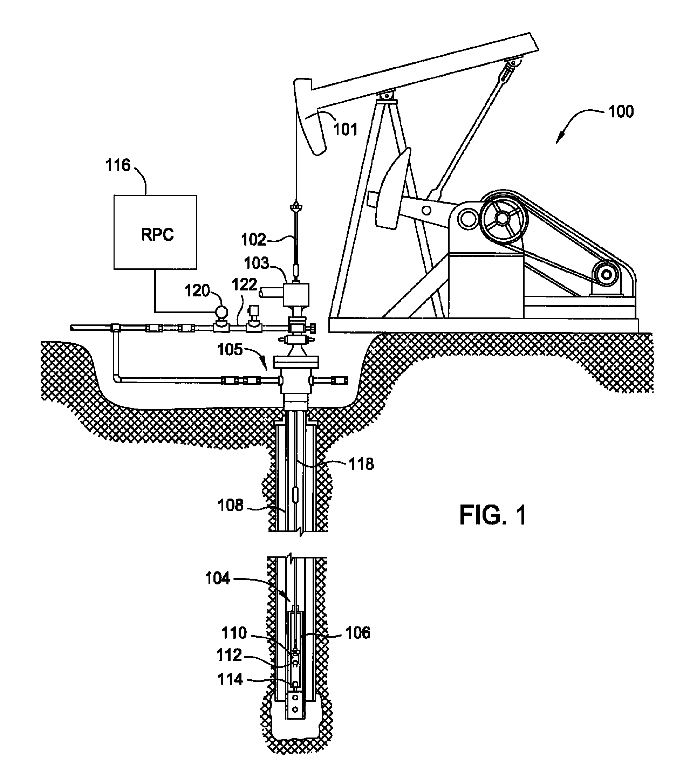

The production of oil with a sucker-rod pump system 100 such as that depicted in FIG. 1 is common practice in the oil and gas industry. In the pump system 100, a rod pump 104 consists of a pump chamber 106 with a standing valve 114 located at the bottom that allows fluid to enter from the wellbore, but does not allow the fluid to leave. Inside the pump chamber 106 is a close-fitting hollow plunger 110 with a traveling valve 112 located at the top. This allows fluid to move from below the plunger 110 to the production tubing 108 above and does not allow fluid to return from the tubing 108 to the pump chamber 106 below the plunger 110. The plunger 110 may be moved up and down cyclically by a horsehead 101 at the surface via the rod string 102.

During the part of the pump cycle where the plunger 110 is moving upward (the "upstroke"), the traveling valve 112 is closed and any fluid above the plunger 110 in the production tubing 108 may be lifted towards the surface. Meanwhile, the standing valve 114 opens and allows fluid to enter the pump chamber 106 from the wellbore.

The highest point of the pump plunger motion may be referred to as "top of stroke" or TOS. At the TOS, the weight of the fluid in the production tubing 108 may be supported by the traveling valve 112 in the plunger 110 and, therefore, also by the rod string 102. This load causes the rod string 102 to be stretched. At this point, the standing valve 114 closes and holds in the fluid that has entered the pump chamber 106.

During the part of the pump cycle where the plunger 110 is moving downward (the "downstroke"), the traveling valve 112 initially remains closed until the plunger 110 reaches the surface of the fluid in the chamber. Sufficient pressure may be built up in the fluid below the traveling valve 112 to balance the pressure due to the column of fluid to the surface in the production tubing 108. The build-up of pressure in the pump chamber 106 reduces the load on the rod string 102; this causes the stretching of the rod string 102 that occurred during the upstroke to relax. This process takes place during a finite amount of time when the plunger 110 rests on the fluid, and the horsehead 101 at the surface allows the top of the rod string 102 to move downward.

The position of the pump plunger 110 at this time is known as the "transfer point" as the load of the fluid column in the production tubing 108 is transferred from the traveling valve 112 to the standing valve 114. This results in a rapid decrease in load on the rod string 102 during the transfer. After the pressure below the traveling valve 112 balances the one above, the valve 112 opens and the plunger 110 continues to move downward to its lowest position ("bottom of stroke" or BOS). The movement of the plunger 110 from the transfer point to the bottom of stroke is known as the "fluid stroke" and is a measure of the amount of fluid lifted by the pump 104 on each stroke. In other words, the portion of the pump stroke below the transfer point may be interpreted as the percentage of the pump stroke which contains fluid. This percentage is the pump fillage.

## AN EXAMPLE PUMP CONTROLLER WITH MULTIPHASE MEASUREMENT

Typically, there are no sensors to measure conditions at the pump 104, which may be located thousands of feet underground. However, numerical methods exist to calculate the position of the pump plunger 110 and the forces acting on it from measurements of the position of and stress in the rod string 102 at the pump control unit (e.g., a rod pump controller (RPC) 116, a variable speed drive, or an RPC having a variable speed drive) located at the surface. These measurements are typically made at the top of the polished rod 118, which is a portion of the rod string 102 passing through a stuffing box 103, using strain sensors coupled to the rod 118 to measure load, for example. The RPC 116 may be used to measure pump fillage for a pump cycle, from which a total liquid flow rate may be determined.

During a pump cycle, the pump moves fluid from the highest point of the production chamber 108 through wellhead 105 into flow path 122. An optical phase fraction meter (e.g., an infrared filter photometer 120), such as a water cut meter, may be disposed within flow path 122. The photometer 120 may provide the phase fraction of water (i.e., the water cut) for the fluid in the flow path 122. By combining the water cut from the photometer 120 with the total flow rate from the rod pump controller 116, the phase flow rate for both water and oil in the flow path 122 may be determined.

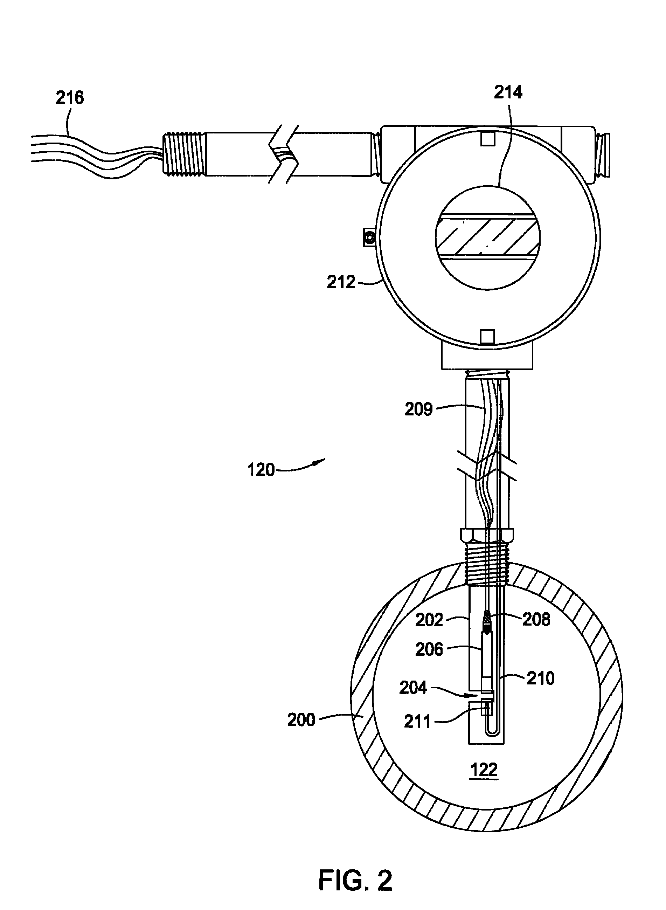

FIG. 2 illustrates the infrared filter photometer 120 disposed on a pipe 200 that carries the flow path 122 therein. For some embodiments, the photometer 120 may comprise a near infrared filter photometer. A probe end 202 of the photometer 120 inserts into the pipe 200 such that a sampling region 204 is preferably located in a central section of the pipe 200. A body portion 212 of the photometer 120 couples to the probe end 202 and houses electronics (not shown) and an optional local display 214 outside of the pipe 200. The photometer 120 further includes a broadband infrared light source 211 coupled to a power supply line 210 and located on an opposite side of the sampling region 204 from a collimator 206 that is coupled to the body portion 212 by optical outputs 209 connected thereto by a common connector 208 such as a SubMiniature Version A (SMA) connector. For some embodiments, the light source 211 includes a tungsten halogen lamp capable of emitting light (e.g., infrared radiation) in a range of wavelengths that includes particular wavelengths selected for interrogation as discussed in detail below. Input and output wiring connections 216 lead from the body portion 212 of the photometer 120 for providing power to the photometer 120 and communication with the rod pump controller 116. The infrared filter photometer 120 may capture flow data as a 4-20 milliamp (mA) or frequency-based signal that can be processed and made accessible to the rod pump controller 116, for example, via the wiring connections 216 using an industry standard protocol, such as Modbus.

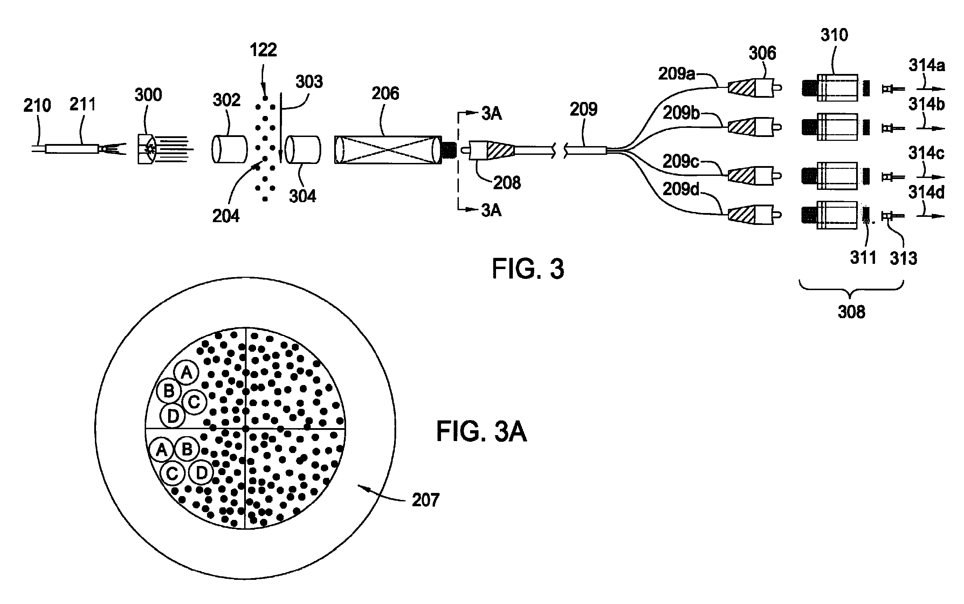

FIG. 3 illustrates internal components of the infrared filter photometer 120 in an exploded view. These components include the source 211, a parabolic reflector 300 for directing light from the source 211, first and second sapphire plugs 302, 304, the collimator 206 and the optical outputs 209 that couple the collimator 206 to infrared filters 308. An area between the sapphire plugs 302, 304 defines the sampling region 204 where fluid of the flow path 122 flows across as indicated by arrow 303.

In operation, light from the source 211 passes through the first sapphire plug 302 and through the fluid of the flow path 122 where the light is attenuated prior to passing through the second sapphire plug 304. Unique absorption characteristics of the various constituents of the flow path 122 cause at least some of the attenuation. The collimator 206 adjacent the second sapphire plug 304 focuses and concentrates the attenuated light into optical outputs 209 via the common connector 208. The optical outputs 209 typically include a multitude of optical fibers that are divided into groups 209a-d. Utilizing one type of standard connector, eighty-four fibers pack within the common connector 208 such that each of the four groups 209a-d comprise a total of twenty one fibers. However, the exact number of fibers and/or groups formed varies for other embodiments.

As illustrated in FIG. 3A by end view 207, the fibers within each of the groups 209a-d may be arranged to avoid sampling at discrete zones which may be affected by inconsistency of the source 211 and/or isolated variations within the flow path 122. Specifically, each individual fiber receives light transmitted across a discrete light path through the fluid that is different from a light path of adjacent fibers. The end view 207 schematically illustrates fiber ends A, B, C, D corresponding to groups 209a, 209b, 209c, 209d, respectively, and arranged such that each quadrant of the end view 207 includes fibers from all groups 209a-d. For example, one fiber of the group 209a receives light passing through a path on the left side of the sampling region 204 while another fiber of the group 209a receives light passing through a path on the right side of the sampling region 204 such that the combined light from both fibers is detected. Accordingly, this arrangement may reduce errors caused by making a measurement at only one discrete location by effectively averaging the light received from all fibers within the group 209a.

Each of the four groups 209a-d connects to a respective housing 310 of one of the infrared filters 308 via a connector 306 such as an SMA connector. Each of the infrared filters 308 includes the housing 310, a narrow bandpass filter 311 and a photodiode 313. The photodiode 313 produces an electrical signal proportional to the light received from a respective one of the groups 209a-d of the optical outputs 209 after passing through a respective one of the filters 311. Preferably, a logamp circuit (not shown) measures the electrical signals to provide up to five decades of range. Each of the filters 311 filters all but a desired narrow band of infrared (or near infrared) radiation. Since each of the filters 311 discriminates for a specific wavelength band that is unique to that filter, each of the groups 209a-d represent a different channel that provides a total attenuation signal 314 indicative of the total attenuation of the light at the wavelengths of that particular filter. Thus, the signals 314a-d from the four channels represent transmitted radiation at multiple different desired wavelength bands.

If only one wavelength is interrogated without comparison to other wavelengths, absorbance-based attenuation associated with that one wavelength cannot be readily distinguished from other non-absorbance-based attenuation that can introduce errors in an absorbance measurement. However, using multiple simultaneous wavelength measurements provided by the signals 314a-d from the different channels enables non-wavelength-dependent attenuation, such as attenuation caused by common forms of scattering, to be subtracted out of the measurements. An appropriate algorithm removes these non-absorbance background influences based on the fact that the non-wavelength-dependent attenuation provides the same contribution at each wavelength and hence at each channel regardless of wavelength-dependent absorbance. Thus, comparing the signals 314a-d from each channel at their unique wavelengths enables correction for non-wavelength-dependent attenuation.

Additionally, selection of the filters 311 determines the respective wavelength for each of the multiple simultaneous wavelength measurements associated with the signals 314a-d from the different channels. Accordingly, the different channels enable monitoring of wavelengths at absorbent peaks of the constituents of the flow path 122, such as water absorbent peaks in addition to oil absorbent peaks, based on the wavelengths filtered. To generally increase resolution, a minute change in the property being measured ideally creates a relatively large signal. Since the relationship between concentration and absorption is exponential rather than linear, large signal changes occur in response to small concentration changes of a substance when there is a low cut or fraction of the substance being measured based on attenuation of the signal from the channel(s) monitoring the wavelengths associated with an absorbent peak of that substance. In contrast, small signal changes occur in response to concentration changes of the substance when there is a high cut of the substance being measured by the same channel(s).

Accordingly, the different channels provide sensitivity for the meter across a full range of cuts of the substance within the flow, such as from 0.0% to 100% phase fraction of the substance. For example, channel(s) with wavelengths at water absorbent peaks provide increased sensitivity for low water fractions while channel(s) with wavelengths at oil absorbent peaks provide increased sensitivity for high water fractions. Thus, the channel(s) with the highest sensitivity can be selected for providing phase fraction results or averaged with the other channels prior to providing the results in order to contribute to the sensitivity of the meter.

Another benefit of the multiple simultaneous wavelength measurements provided by the signals 314a-d from the different channels includes the ability to accurately calibrate the photometer 120 with a small amount of pure fluid. Thus, calibration of the photometer 120 need not require a reference cut. Selection of wavelengths as disclosed herein for the channels reduces sensitivity to different types of oil in order to further simplify calibration. For example, oils which are light in color or even clear have an optimal absorbance peak around a wavelength of 1750 nanometers, but black oils have stronger absorbance around a wavelength of 1000 nanometers. If two of the four channels include filters at these wavelengths, then the algorithm can determine the optimal choice at the calibration stage rather than requiring a hardware change for different oil types.

Preferred embodiments of the photometer 120 may use the broadband source 211 and the filters to isolate wavelengths associated with the channels. However, other embodiments of the photometer 120 may include separate narrow band sources, tunable filters, and/or a single tunable source that is swept for the desired wavelengths of the channels.

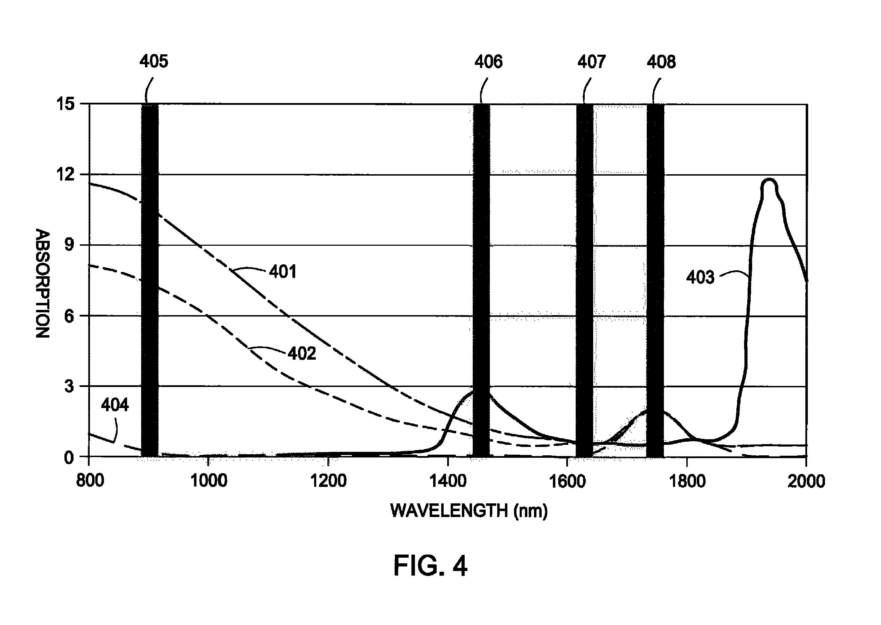

FIG. 4 illustrates a graph of absorption versus wavelength for two types of oil indicated by curves 401, 402, water represented by curve 403 and condensate denoted by curve 404 for an infrared region. Gas provides relatively zero absorption and has accordingly been omitted from the graph. The graph shows four preferred wavelength bands 405-408 for filtering by the filters 311 in order to provide the four channels of the infrared filter photometer 120. Other wavelength bands may be selected without departing from the scope of the invention. The infrared filter photometer 120 essentially ignores salinity changes since typical salinity levels have negligible effect on water absorption over the spectral region of interest. Additionally, lack of significant absorption by gas makes the photometer 120 substantially insensitive to free gas in the flow path 122. In this manner, the photometer 120 is able to measure water cut in the presence of a free gas bubble.

In general, a first wavelength band 405 includes wavelengths within a range of approximately 900 nanometers (nm) to 1200 nm, for example about 950 nm, where there is an oil absorbent peak. A second wavelength band 406 includes wavelengths centered around 1450 nm where there is a water absorbent peak. A trough around 1650 nm provides another interrogation region where a third wavelength band 407 generally is centered. A fourth wavelength band 408 generally includes a peak centered about 1730 nm that is fundamentally associated with carbon-hydrogen bonds of the oil 401, 402 and the condensate 404. A fifth wavelength band (not shown) includes wavelengths centered around 1950 nm where there is another water absorbent peak. The substantial similarities and/or differences in the absorbance of the different phases at each of the bands 405-408 further enables their differentiation from one another with the infrared filter photometer 120.

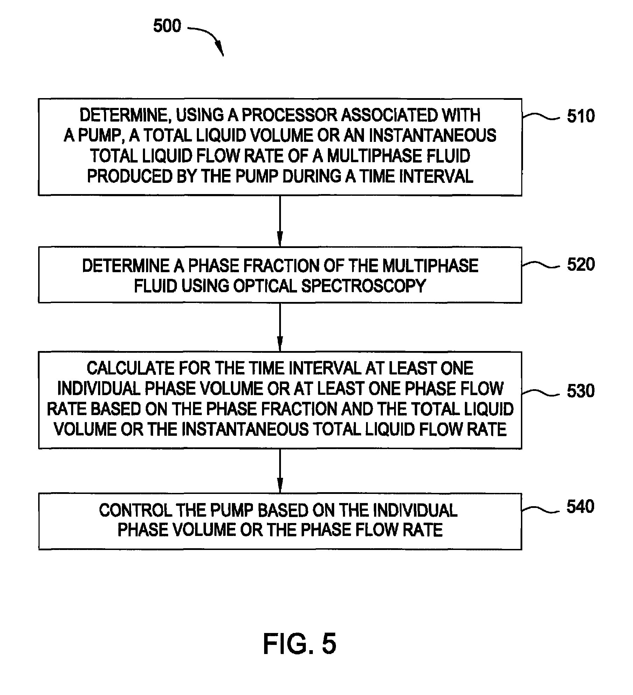

FIG. 5 shows a flow chart of example operations 500-which may be performed by the infrared filter photometer 120 and/or the rod pump controller 116 (shown in FIG. 1)-for determining at least one individual phase volume or at least one phase flow rate of a multiphase fluid. The operations 500 may begin, at step 510, by determining, using a processor associated with pump, a total liquid volume or an instantaneous total liquid flow rate of a multiphase fluid produced by the pump during a time interval. The processor may comprise a control unit for controlling the pump. For some embodiments, the control unit may comprise a rod pump controller 116.

At step 520, a phase fraction of the multiphase fluid may be determined using optical spectroscopy. For example, the processor (e.g., the rod pump controller 116) may calculate a phase fraction of at least one phase (e.g., a water cut) based on absorbance measurements made by the infrared filter photometer 120. These absorbance measurements are described in greater detail below with respect to determining the water cut.

Water cut measurements (*i.e.*, water cut (water/total liquid ratio) only with no measure of the gas phase volume) may be made throughout a wide range of free gas phase content in the stream. Three exemplary flow regimes may be defined as *i*) dispersed gas bubble in liquid; *ii*) gas-liquid slugs; and *iii*) dispersed liquid in gas. The first two flow regimes cover flows where about 0-95% gas volume fraction (GVF) exists while the last regime includes about 95-99.99% GVF.

For full range water cut (0-100%) with three phase streams (e.g., oil, water, and gas) where gas can represent about 0-95% GVF, absorbance measurements performed using the photometer 120 correspond to a function which may be defined as:

$$A_i = a_{oi}x_o + a_{wi}x_w + S \qquad (1)$$

where:

$A_i$ = total absorbance at wavelength *i* and includes chemical (absorption) and physical (scattering) effects;
$a_{oi}$ = absorption coefficient for oil at wavelength *i*;
$a_{wi}$ = absorption coefficient for water at wavelength *i*;
$x_o$ = pathlength of oil;
$x_w$ = pathlength of water; and
S = scatter contribution to overall absorbance (wavelength independent).
Theoretically, there is also a gas term ($a_{gi}x_g$, where $a_{gi}$ = absorption coefficient for gas at wavelength *i* and $x_g$ = pathlength of gas), but the absorption by gas is negligible (*i.e.*, $a_{gi} \approx 0$), so the gas term drops out from the equation.

Making three separate absorbance measurements for three different wavelengths enables solving for three unknowns ($x_o$, $x_w$, and $S$) in Equation 1. This allows for the potential of increased effective pathlength due to scattering. This approach works for flow regimes without gas or with the dispersed gas bubbles in liquid (flow regime i) to enable calculation of the water cut based on the pathlength of water $x_w$ relative to the total pathlength $x_w + x_o$. The wavelengths are chosen such that the various fluid constituents (e.g., oil and water) have different absorption profiles, in order to differentiate between the constituents.

For the gas-liquid slugs (flow regime *ii*), the photometer 120 may apply a weighting factor to the measured water cut using the liquid content in the sensor gap. The total liquid pathlength ($x_w + x_o$) can drop to 0 if there is no liquid in the sensor gap. Integrating the product of instantaneous water cut and total liquid pathlength over a period of time (e.g., 30 min.) and divining by the cumulative total pathlength over that time provides a liquid weighted water cut rather than a time-averaged water cut. Therefore, applying Equation 1 as described above during these selected intervals associated with liquid slugs passing across the meter enables an improved calculation for the water cut, which is independent of the quantity of gas.

After determining the phase fraction of the multiphase fluid at step 520, at least one individual phase volume or at least one phase flow rate based on the phase fraction and the total liquid volume or the instantaneous liquid flow rate may be calculated for the time interval at step 530. For some embodiments, a pump control unit (e.g., the rod pump controller 116) may perform this calculation. For some embodiments, calculating the individual phase volume for the time interval may comprise integrating the calculated phase flow rate over the time interval.

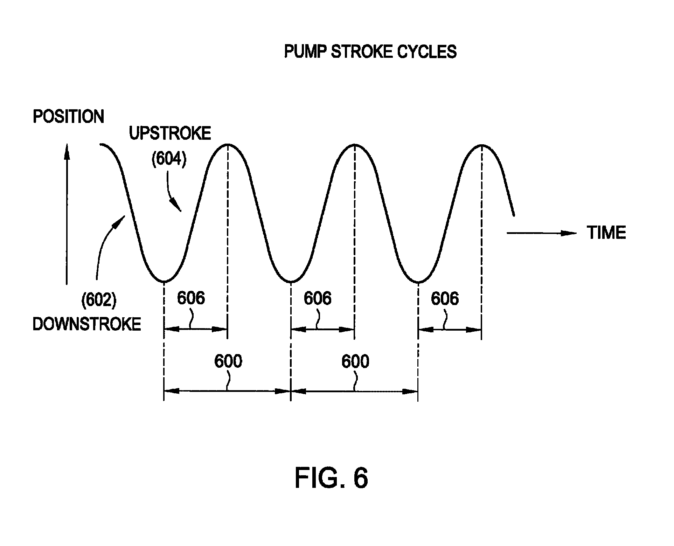

FIG. 6 illustrates several pump stroke cycles 600 and proper periods during the pump stroke cycles for taking measurements with the infrared filter photometer 120. The declining portion of the pump-position-versus-time curve in each pump stroke cycle 600 represents the downstroke 602 of the plunger 110 of the pump system 100. The inclining portion of the curve in each pump stroke cycle 600 represents the upstroke 604 of the plunger 110 of the pump system 100. Each pump cycle 600 involves one downstroke 602 and one upstroke 604 of the pump plunger 110.

The rod pump controller 116 does not calculate flow rate at any particular point in the pump stroke. Instead, the rod pump controller 116 determines the amount of pump fillage on the downstroke, which tells the controller the volume of fluid that will be brought up on the subsequent upstroke. The pump fillage on the downstroke may be determined from measurements of the load on the rod string 102 and position of the pump plunger 110 to obtain the transfer point (and hence, the volume in the pump chamber 106 during the subsequent upstroke) as described above with respect to FIG. 1. For some embodiments, the pump fillage may be determined based on the shape of a downhole pump card graphically representing load versus position during a pump cycle, as described in U.S. Patent No. 5,252,031 to Gibbs, entitled "Monitoring and Pump-Off Control with Downhole Pump Cards." For other embodiments, more accurate methods of determining the pump fillage may be used, such as those described in U.S. Patent Application Serial No. 12/905,919 to Ehimeakhe, filed October 15, 2010 and entitled, "Calculation of Downhole Pump Fillage and Control of Pump Based on Said Fillage," herein incorporated by reference.

The infrared filter photometer 120 may provide an instantaneous water cut regardless of whether the fluid in the flow path 122 is flowing. Thus, the rod pump controller 116 may only record data from the photometer 120 during each upstroke 604 and then apply those readings to the pump fillage for that stroke. The period 606 represents the proper time for taking valid readings from the photometer 120. Because the water cut will likely vary over the course of the upstroke 604, the measurements taken by the infrared filter photometer 120 may most likely be averaged in some manner by the rod pump controller 116 at the end of each upstroke 604.

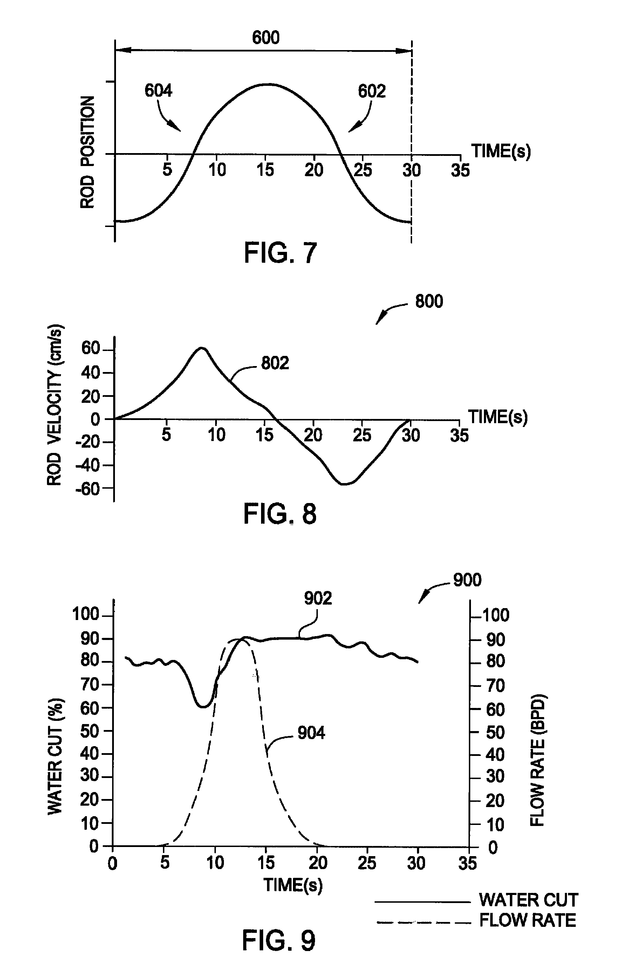

For other embodiments, the rod pump controller 116 may use the position of the pump plunger 110 (*i.e.*, rod position data) to determine the velocity of the polished rod 118 (*i.e.*, rod velocity) as a function of time. For example, FIG. 7 illustrates the rod position for a single pump cycle 600 having both an upstroke 604 and a downstroke 602. FIG. 8 is a graph 800 of rod velocity 802 versus time for the example rod position data of FIG. 7. A positive rod velocity corresponds to a positive flow rate, while a negative rod velocity corresponds to a flow rate of zero.

FIG. 9 is a graph 900 of the water cut 902 (as determined by the infrared filter photometer 120) versus time and the flow rate 904 versus time. The flow rate profile may be determined by combining the velocity profile (e.g., the rod velocity 802 of FIG. 8) with the total inferred volume, wherein the area under the flow rate 904 equals the inferred volume. There may most likely be a time shift between the downhole rod velocity profile and the surface flow rate profile due to a variety of factors including gas compression/expansion. Consequently, the rod pump controller 116 may employ phase fraction (e.g., water cut) data from the infrared filter photometer 120 to determine likely start and/or stop flow points. In order to utilize the phase fraction data, the rod pump controller 116 may log time-stamped data from the infrared filter photometer 120. For the previous pump cycle 600, a pattern recognition algorithm may be used to identify likely start and/or stop time of the positive flow. The flow rate profile may be shifted along the time axis to match these start and/or stop times. Then, the product of the instantaneous flow rate and the instantaneous phase fraction (e.g., instantaneous water cut) may be integrated over the pump cycle to determine the various individual phase volumes of the multiphase fluid (e.g., the oil and water volumes). For some embodiments, these pump volumes may then be added to an accumulator in the rod pump controller 116 in an effort to determine total individual phase volumes of the multiphase fluid over a period of time.

Returning to FIG. 5, the processor (e.g., the rod pump controller 116 or another suitable pump control unit) may control the pump based on the individual phase volume or the phase flow rate at step 540. Controlling operation of the pump may comprise adjusting the pump cycle frequency, the pump interval, and/or the delay between pump intervals (*i.e.*, the variable pump duty cycle).

In summary, the combination of the infrared filter photometer and the processor associated with the pump offers a complete package to provide operators with accurate well-testing data from equipment mounted at the well head. Inferred production from the pump processor may be employed to determine daily volume totals, and measurements from the photometer may be utilized to determine what percentage of that total volume is oil and water.

Embodiments of the invention provide a number of advantages over typical pump systems. For example, previous pump control systems have been able to offer gross fluid measurements, but those measurements have never been coupled with real-time water cut measurements. Additionally, embodiments of the invention provide a system that is much cheaper than typical multiphase meters, which may be occasionally attached to a single well, especially given that a pump controller is already present in a typical pump system. Further, embodiments of the invention measure the water cut of an individual well at the wellhead, without routing the fluid to a centrally located test separator for a field of wells, such that each well may be continuously monitored.

While the foregoing is directed to embodiments of the present invention, other and further embodiments of the invention may be devised without departing from the basic scope thereof, and the scope thereof is determined by the claims that follow.

**Claims**

1.  An apparatus for determining at least one parameter of a multiphase fluid produced by a pump, comprising:

    an optical phase fraction meter configured to determine a phase fraction of the multiphase fluid; and
    at least one processor configured to:

    determine a total liquid volume or an instantaneous total liquid flow rate of the multiphase fluid produced by the pump during a time interval; and
    determine for the time interval at least one individual phase volume or at least one phase flow rate, based on the phase fraction determined by the optical phase fraction meter and the total liquid volume or the instantaneous total liquid flow rate.

2.  The apparatus of claim 1, wherein the at least one processor comprises a controller for controlling the pump.

3.  The apparatus of claim 1 or 2, wherein the optical phase fraction meter comprises an infrared filter photometer comprising:

    a light source for emitting multiple wavelength bands of infrared radiation into the multiphase fluid; and
    a detector for detecting absorption of the wavelength bands after the infrared radiation passes through a portion of the multiphase fluid produced by the pump, wherein the phase fraction is determined based on the absorption of the wavelength bands, wherein the detector comprises a plurality of optical fibers, and wherein groups of the optical fibers are routed to different outputs used to measure the absorption of different wavelength bands.

4.  The apparatus of claim 3, wherein the phase fraction of the multiphase fluid is a water cut and the light source emits at least two wavelength bands having different absorption characteristics for water and oil phases within the at least two wavelength bands.

5.  The apparatus of claim 4, wherein the at least two wavelength bands are selected to be at least two of: between about 900 nm and 1200 nm, about 1450 nm, about 1650 nm, about 1730 nm, and about 1950 nm.

6.  A method comprising:

    determining, using a processor associated with a pump, a total liquid volume or an instantaneous total liquid flow rate of a multiphase fluid produced by the pump during a time interval;
    determining a phase fraction of the multiphase fluid using optical spectroscopy; and
    calculating for the time interval at least one individual phase volume or at least one phase flow rate based on the phase fraction and the total liquid volume or the instantaneous total liquid flow rate.

7.  The method of claim 6, wherein the processor comprises a control unit for controlling the pump.

8.  The method of claim 6 or 7, wherein determining the phase fraction of the multiphase fluid comprises using near infrared optical absorption spectroscopy.

9. The method of claim 6, 7 or 8, wherein determining the phase fraction of the multiphase fluid comprises using a water cut meter.

10. The method of claim 6, 7, 8 or 9, wherein the time interval comprises at least a portion of an upstroke period during a pump cycle of the pump and wherein determining the phase fraction of the multiphase fluid comprises averaging a plurality of phase fraction measurements taken during the at least the portion of the upstroke period.

11. The method of claim 6, 7, 8, 9 or 10, wherein determining the phase fraction comprises:

emitting multiple wavelength bands of infrared radiation into the multiphase fluid; and
detecting, during the time interval, absorption of the wavelength bands after the infrared radiation passes through a portion of the multiphase fluid, wherein the phase fraction is determined based on the absorption of the wavelength bands.

12. The method of any of claims 6 to 11, wherein determining the total liquid volume or the instantaneous total liquid flow rate comprises using strain sensors coupled to the pump.

13. The method of any of claims 6 to 12, wherein calculating the individual phase volume for the time interval comprises integrating the calculated phase flow rate over the time interval.

14. The method of any of claims 6 to 13, further comprising calculating an oil volume for the pump cycle, wherein the phase fraction comprises a water cut, wherein the at least one individual phase volume comprises a water volume, and wherein the oil volume is calculated by subtracting the water volume from the total liquid volume.

15. The method of any of claims 6 to 14, further comprising controlling the pump based on the at least one individual phase volume or the at least one phase flow rate.

FIG. 1

FIG. 2

FIG. 3

FIG. 3A

EP 2 505 971 A2

FIG. 4

EP 2 505 971 A2

500 —

DETERMINE, USING A PROCESSOR ASSOCIATED WITH A PUMP, A TOTAL LIQUID VOLUME OR AN INSTANTANEOUS TOTAL LIQUID FLOW RATE OF A MULTIPHASE FLUID PRODUCED BY THE PUMP DURING A TIME INTERVAL — 510

DETERMINE A PHASE FRACTION OF THE MULTIPHASE FLUID USING OPTICAL SPECTROSCOPY — 520

CALCULATE FOR THE TIME INTERVAL AT LEAST ONE INDIVIDUAL PHASE VOLUME OR AT LEAST ONE PHASE FLOW RATE BASED ON THE PHASE FRACTION AND THE TOTAL LIQUID VOLUME OR THE INSTANTANEOUS TOTAL LIQUID FLOW RATE — 530

CONTROL THE PUMP BASED ON THE INDIVIDUAL PHASE VOLUME OR THE PHASE FLOW RATE — 540

FIG. 5

PUMP STROKE CYCLES

FIG. 6

**FIG. 7**

**FIG. 8**

WATER CUT
FLOW RATE

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5252031 A, Gibbs

- US 90591910 A, Ehimeakhe